# EUROPÄISCHE PATENTSCHRIFT

(11) **EP 2 088 379 B1**
(45) Veröffentlichungstag und Bekanntmachung des Hinweises auf die Patenterteilung: **11.09.2013**
(21) Anmeldenummer: 07014559.4
(22) Anmeldetag: 25.07.2007
(51) Int. Cl.: F24H 9/20, F24D 19/10

(54) **Verfahren zur Regelung eines Heizgerätes**
Method for regulating a heating device
Procédé destiné au réglage d'un appareil de chauffage

(43) Veröffentlichungstag der Anmeldung: 12.08.2009
(73) Patentinhaber: Robert Bosch GmbH, 70469 Stuttgart (DE)
(72) Erfinder: Garcia, Felipe Cuenca, 35099 Burgwald (DE)

(56) Entgegenhaltungen:
- WO-A1-85/04239
- DE-C1- 4 333 507
- US-A- 4 474 325
- US-A- 5 779 143

## Beschreibung

Die Erfindung betrifft ein Verfahren zur Regelung eines Heizgerätes nach dem Oberbegriff des Patentanspruches 1.

Ganz allgemein sind aus der US 5 779 143 A sowie der WO 85/04239 A1 Regeleinrichtungen für Heizungs- und Warmwasserbereitungssysteme bekannt. Dazu gehört auch die Brennersteuerung im Falle einer Befeuerung mit fossilen Brennstoffen.

Brenner von Heizgeräten werden mit einem Feuerungsautomaten geregelt. Dafür gibt es im Wesentlichen einen Heizwassertemperatur-Sollwert für die Brennerein- und die Brennerausschaltung. Beide Werte sind von Betriebsparametern der Heizungsanlage abhängig. Weiterhin sind gattungsgemäße Heizgeräte mit einer Messeinrichtung zur Erfassung der Heizwassertemperatur, welche der Vorlauftemperatur in einem angeschlossenen Heizkreislauf entspricht, versehen. Außerdem besitzen sie einen Sicherheitstemperaturbegrenzer, in der Regel mit einem weiteren Temperatursensor, der beim Erreichen oder Überschreiten eines fest vorgegebenen Maximalwertes der Heizwassertemperatur den Brenner abschaltet. Das Heizgerät geht auf Störung.

Bisher wird das Ansprechen eines Sicherheitstemperaturbegrenzers meisten von Hand vom Fachpersonal bei Inbetriebnahme- oder Wartungsarbeiten überprüft. Dies erfordert diverse Beobachtungen und somit entsprechende Aufmerksamkeit vom Fachpersonal. Problematisch können Sicherheitstemperaturbegrenzern auch Installationsfehler sein. Beispielsweise werden Sicherheitstemperaturbegrenzer nicht oder nicht richtig angeschlossen und positioniert, oder es wird bei Tests manipuliert, nämlich indem mit einem Feuerzeug das Ansprechen geprüft wird.

Der Erfindung liegt die Aufgabe zugrunde, die Bedienung und Installation eines Heizgerätes zu optimieren.

Erfindungsgemäß wird dies mit den Merkmalen des Patentanspruches 1 gelöst. Vorteilhafte Weiterbildungen sind den Unteransprüchen zu entnehmen.

Das Verfahren ist dadurch gekennzeichnet, dass eine Testfunktion für den Sicherheitstemperaturbegrenzer über eine Schnittstelle zu aktivieren ist, bei der der Heizwassertemperatur-Sollwert für einen Zeitraum nach dem Starten der Testfunktion über den für den Sicherheitstemperaturbegrenzer vorgegebenen Maximalwert der Heizwassertemperatur gesetzt wird, bei der während dieser Phase der Gradient der Heizwassertemperatur überwacht wird und bei der mindestens eine Pumpe gemäß vorgebbarer Schwellwerte für aktuell vorliegende Heizwassertemperaturen während dieser Phase ein- und ausgeschaltet wird.

Die Testfunktion für den Sicherheitstemperaturbegrenzer wird über eine Schnittstelle, also zum Beispiel auch manuell, oder automatisch nach Ablauf einer vorgegebenen Zeit beendet. Dabei bleibt mindestens eine Pumpe nach dem Starten der Testfunktion ausgeschaltet, bis die Heizwassertemperatur einen vorgegebenen Wert, vorzugsweise etwa 60° C, erreicht hat. Danach beginnt ein Pumpenbetrieb für eine vorgegebene Zeit, vorzugsweise 3 bis 15 Minuten. Damit wird im Normalzustand, mit einem ordnungsgemäß installierten Sicherheitstemperaturbegrenzer, kurzzeitig ein fallender Temperaturgradient erzeugt. Anschließend setzt wieder der Pumpenbetrieb aus, um im Normalzustand kurzzeitig einen steigenden Temperaturgradienten zu erzeugen, bis der Sicherheitstemperaturbegrenzer beim Erreichen des vorgegebenen Maximalwertes der Heizwassertemperatur auslöst.

Dagegen wird eine Fehlermeldung ausgelöst oder wahlweise auch eine Störabschaltung veranlasst, wenn sich die Heizwassertemperatur nicht innerhalb einer vorgegebenen Zeit ändert und der Temperaturgradient niedriger als ein vorgegebener Schwellwert ist, sowie wenn die Heizwassertemperatur innerhalb einer vorgegebenen Zeit zu schnell steigt und der Temperaturgradient größer als ein vorgegebener Schwellwert ist. Generell sind Schwellwerte, Zeiten, Heizwassertemperatur-Sollwerte und Temperaturgradienten im Regler hinterlegt und können zur Anpassung an die Betriebsbedingungen des Heizgerätes bei der Installation vom Fachpersonal entsprechend verändert bzw. eingestellt. Der Zeitpunkt der Aktivierung sowie das Resultat der Testfunktion für den Sicherheitstemperaturbegrenzer werden im Regler gespeichert.

Mit dem erfindungsgemäßen Verfahren wird die Bedienung und Installation eines Heizgerätes optimiert, denn es steht eine einfache und sichere Möglichkeit zum Überprüfen eines Sicherheitstemperaturbegrenzers zur Verfügung, mit der Bedienungsfehler oder Manipulationsversuche minimiert werden können. Außerdem wird das Fachpersonal bei einer anstehenden Überprüfung des Sicherheitstemperaturbegrenzers entlastet, weil diese automatisch im Hintergrund ablaufen kann.

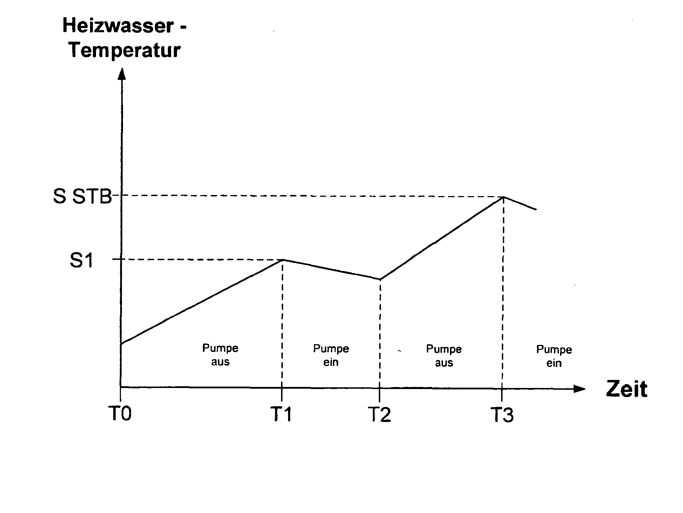

Die Zeichnung stellt ein Ausführungsbeispiel der Erfindung dar und zeigt in einer einzigen Figur den schematischen Ablauf nach dem Aktivieren einer Testfunktion für einen Sicherheitstemperaturbegrenzer im ordnungsgemäßen Normalzustand.

Zum Zeitpunkt T0 wird die Testfunktion für den Sicherheitstemperaturbegrenzer aktiviert und es beginnt eine Aufheizung des Heizgerätes mit ausgeschalteter Pumpe. Ein Anstieg der Heizwassertemperatur wird detektiert. Sobald ein vorgegebener Schwellwert S1 für die Heizwassertemperatur, zum Beispiel 60° C, erreicht ist, schaltet die Pumpe im Zeitpunkt T1 ein. Dann muss der Gradient der Heizwassertemperatur wieder fallen. Dies kommt erst zum Zeitpunkt T2 zum Stillstand, nämlich wenn die Pumpe wieder eingeschaltet wird, um eine Aufheizung auf den vorgegebenen Maximalwert der Heizwassertemperatur S STB mit einem positiven Temperaturgradienten durchzuführen, so dass der Sicherheitstemperaturbegrenzer dann korrekt zum Zeitpunkt T3 anspricht.

## Patentansprüche

1. Verfahren zur Regelung eines Heizgerätes, mit einem Feuerungsautomaten zur Regelung von Brennerschaltungen mit je einem von Betriebsparametern der Heizungsanlage abhängigen Heizwassertemperatur-Sollwert für die Brennereinschaltung und Brennerausschaltung, einer Messeinrichtung zur Erfassung der Heizwassertemperatur, die der Vorlauftemperatur in einem angeschlossenen Heizkreislauf entspricht, einem Sicherheits-temperaturbegrenzer mit einem weiteren Temperatursensor, welcher beim Erreichen oder Überschreiten eines fest vorgegebenen Maximalwertes der Heizwassertemperatur (S STB) den Brenner ausschaltet, sowie mindestens einer Pumpe in mindestens einem Heizwasserkreislauf,
**dadurch gekennzeichnet, dass** eine Testfunktion für den Sicherheitstemperaturbegrenzer über eine Schnittstelle zu aktivieren ist, bei der der Heizwassertemperatur-Sollwert für einen Zeitraum nach dem Starten der Testfunktion über den für den Sicherheitstemperaturbegrenzer vorgegebenen Maximalwert der Heizwassertemperatur (S STB) gesetzt wird, bei der während dieser Phase der Gradient der Heizwassertemperatur überwacht wird und bei der mindestens eine Pumpe gemäß vorgebbarer Schwellwerte (S1) für aktuell vorliegende Heizwassertemperaturen während dieser Phase ein- und ausgeschaltet wird, wobei die mindestens eine Pumpe nach dem Starten der Testfunktion ausgeschaltet bleibt, bis die Heizwassertemperatur einen vorgegebenen Wert erreicht hat, wobei danach ein Pumpenbetrieb für eine vorgegebene Zeit beginnt, um im Normalzustand kurzzeitig einen fallenden Temperaturgradienten zu erzeugen, und wobei danach wieder der Pumpenbetrieb aussetzt, um im Normalzustand kurzzeitig einen steigenden Temperaturgradienten zu erzeugen, bis der Sicherheitstemperaturbegrenzer beim Erreichen des vorgegebenen Maximalwertes der Heizwassertemperatur (S STB) auslöst.

2. Verfahren nach Anspruch 1,
**dadurch gekennzeichnet, dass** die Testfunktion für den Sicherheitstemperaturbegrenzer über eine Schnittstelle oder automatisch nach Ablauf einer vorgegebenen Zeit beendet wird.

3. Verfahren nach den Ansprüchen 1 oder 2,
**dadurch gekennzeichnet, dass** eine Fehlermeldung ausgelöst wird, wenn sich die Heizwassertemperatur nicht innerhalb einer vorgegebenen Zeit ändert und der Temperaturgradient niedriger als ein vorgegebener Schwellwert ist, sowie wenn die Heizwassertemperatur innerhalb einer vorgegebenen Zeit zu schnell steigt und der Temperaturgradient größer als ein vorgegebener Schwellwert ist.

4. Verfahren nach einem der Ansprüche 1 bis 3,
**dadurch gekennzeichnet, dass** Schwellwerte, Zeiten, Heizwassertemperatur-Sollwerte und Temperaturgradienten im Regler hinterlegt und zur Anpassung an die Betriebsbedingungen des Heizgerätes einstellbar sind.

5. Verfahren nach einem der Ansprüche 1 bis 4,
**dadurch gekennzeichnet, dass** der Zeitpunkt der Aktivierung sowie das Resultat der Testfunktion für den Sicherheitstemperaturbegrenzer im Regler gespeichert werden.

## Claims

1. Method for regulating a heating device, having an automated firing unit for regulating burner switching operations with in each case one heating-water temperature setpoint value for the burner switch-on and burner switch-off, which setpoint value is dependent on operating parameters of the heating system, a measuring device for detecting the heating-water temperature which corresponds to the flow temperature in a connected heating circuit, a safety temperature limiter with a further temperature sensor which switches off the burner when a fixedly predefined maximum value of the heating-water temperature (S STB) is reached or exceeded, and at least one pump in at least one heating-water circuit,
**characterized in that** a test function for the safety temperature limiter is to be activated via an interface, in which test function the heating-water temperature setpoint value is set for a time period after starting of the test function via the maximum value of the heating-water temperature (S STB), which maximum value is predefined for the safety temperature limiter, in which test function the gradient of the heating-water temperature is monitored during this phase, and in which test function at least one pump is switched on and off in accordance with predefinable threshold values (S1) for currently prevailing heating-water temperatures during this phase, the at least one pump remaining switched off after the starting of the test function until the heating-water temperature has reached a predefined value, a pump operation subsequently beginning for a predefined time, in order to produce a falling temperature gradient briefly in the normal state, and the pump operation subsequently being turned off again, in order to produce an increasing temperature gradient briefly in the normal state, until the safety temperature limiter triggers when the predefined maximum value of the heating-water temperature (S STB) is reached.

2. Method according to Claim 1, **characterized in that** the test function for the safety temperature limiter is ended via an interface or automatically after a predefined time has passed.

3. Method according to Claim 1 or 2, **characterized in that** a fault message is triggered if the heating-water temperature does not change within a predefined time and the temperature gradient is lower than a predefined threshold value, and if the heating-water temperature rises too rapidly within a predefined time and the temperature gradient is greater than a predefined threshold value.

4. Method according to one of Claims 1 to 3, **characterized in that** threshold values, times, heating-water temperature setpoint values and temperature gradients are stored in the regulator and can be set for adaptation to the operating conditions of the heating device.

5. Method according to one of Claims 1 to 4, **characterized in that** the instant of the activation and - the result of the test function for the safety temperature limiter are stored in the regulator.

## Revendications

1. Procédé de régulation d'un appareil de chauffage, avec une commande automatique d'allumage pour la régulation de circuits de brûleur à chaque fois avec une valeur de consigne de température d'eau primaire, laquelle dépend des paramètres de fonctionnement de l'installation de chauffage, pour la mise en marche du brûleur et l'arrêt du brûleur, un dispositif de mesure pour détecter la température d'eau primaire, laquelle correspond à la température de départ dans un circuit de chauffage raccordé, un limiteur de température de sécurité muni d'une sonde de température supplémentaire qui arrête le brûleur lorsqu'une valeur maximale fixement prédéfinie de la température d'eau primaire (S STB) est atteinte ou dépassée, et au moins une pompe dans au moins un circuit d'eau primaire,
**caractérisé en ce qu'**une fonction de test pour le limiteur de température de sécurité doit être activée par le biais d'une interface, avec laquelle la valeur de consigne de la température d'eau primaire est fixée, pendant une période donnée après le démarrage de la fonction de test, au-dessus de la valeur maximale de la température d'eau primaire (S STB) prédéfinie pour le limiteur de température de sécurité, avec laquelle, pendant cette phase, le gradient de la température d'eau primaire est surveillé et avec laquelle l'au moins une pompe est mise en marche et arrêtée conformément à des valeurs de seuil (S1) pouvant être prédéfinies pour les températures d'eau primaire actuellement présentes pendant cette phase, l'au moins une pompe restant arrêtée après le démarrage de la fonction de test jusqu'à ce que la température d'eau primaire ait atteint une valeur prédéfinie, après quoi un fonctionnement de la pompe commençant pendant une durée prédéfinie afin de produire pendant une courte durée à l'état normal un gradient de température décroissant, et après quoi le fonctionnement de la pompe prenant de nouveau fin afin de produire pendant une courte durée à l'état normal un gradient de température croissant jusqu'à ce que le limiteur de température de sécurité se déclenche en atteignant la valeur maximale prédéfinie de la température d'eau primaire (S STB).

2. Procédé selon la revendication 1, **caractérisé en ce que** la fonction de test pour le limiteur de température de sécurité est arrêtée par le biais d'une interface ou automatiquement après écoulement d'une durée prédéfinie.

3. Procédé selon les revendications 1 ou 2, **caractérisé en ce qu'**un message d'erreur est déclenché lorsque la température d'eau primaire ne varie pas pendant une durée prédéfinie et le gradient de température est inférieur à une valeur de seuil prédéfinie, et aussi lorsque la température d'eau primaire augmente trop rapidement pendant une durée prédéfinie et le gradient de température est supérieur à une valeur de seuil prédéfinie.

4. Procédé selon l'une des revendications 1 à 3, **caractérisé en ce que** les valeurs de seuil, les durées, les valeurs de consigne de la température d'eau primaire et les gradients de température sont stockés dans le régulateur et peuvent être réglés pour être adaptés aux conditions de fonctionnement de l'appareil de chauffage.

5. Procédé selon l'une des revendications 1 à 4, **caractérisé en ce que** le moment de l'activation ainsi que le résultat de la fonction de test pour le limiteur de température de sécurité sont mis en mémoire dans le régulateur.
